# EUROPÄISCHE PATENTSCHRIFT

(11) **EP 3 071 477 B1**
(45) Veröffentlichungstag und Bekanntmachung des Hinweises auf die Patenterteilung: **26.12.2018**
(21) Anmeldenummer: 14828438.3
(22) Anmeldetag: 20.11.2014
(51) Int. Cl.: B64C 1/18, B64C 1/06, B64C 1/12, B64D 11/00

(54) **INNENVERKLEIDUNGSTEIL UND FERTIGTEIL - BAUGRUPPE FÜR EINE LUFTFAHRZEUGZELLE**
INTERIOR TRIM PART AND SET OF PREFABRICATED PARTS FOR AN AIRCRAFT CELL
ÉLÉMENT D'HABILLAGE INTÉRIEUR ET ENSEMBLE PRÉFABRIQUÉ D'ÉLÉMENTS POUR CELLULE D'AVION

(30) Priorität: 20.11.2013 AT 8992013
(43) Veröffentlichungstag der Anmeldung: 28.09.2016
(73) Patentinhaber: Helikopter Air Transport GmbH, 1030 Wien (AT)
(72) Erfinder: WEGER, Martin, A-6166 Fulpmes (AT); BURGER, Wolfgang, A-6511 Zams (AT)
(74) Vertreter: Ellmeyer, Wolfgang
(86) Internationale Anmeldenummer: PCT/AT2014/050278
(87) Internationale Veröffentlichungsnummer: WO 2015/074090

(56) Entgegenhaltungen:
- DE-A1-102004 001 080
- DE-A1-102006 048 376
- US-A- 2 391 051
- US-A- 5 108 048
- US-A1- 2012 145 828

## Beschreibung

Die Erfindung betrifft einen Innenverkleidungsteil zum flächigen Einbau mit gleichartigen Innenverkleidungsteilen zum Erzeugen einer Wandverkleidung innerhalb einer Luftfahrzeugzelle, wobei das Innenverkleidungsteil mit der Luftfahrzeugzelle fest verbindbar ist, wobei das Innenverkleidungsteil eine gitterförmige Tragestruktur mit Gitterknoten und Gitterstegen aufweist, wobei zumindest eine Halterungsposition vorgesehen ist, die zur innenraumseitigen Lastaufnahme ausgebildet ist, wobei die gitterförmige Tragestruktur durch ein Gitter gebildet ist, und wobei an den Gitterknoten die Halterungspositionen ausgebildet sind, sodass das Innenverkleidungsteil eine Vielzahl von auswählbaren Halterungspositionen in rasterförmiger Anordnung aufweist, um innenraumseitig eine variable Anbringung von, insbesondere medizinischen Ausrüstungsvorrichtungen zu ermöglichen.

Im Luftfahrzeugbau ist es aus verschiedenen Gründen erforderlich, im Inneren der Luftfahrzeugzelle eine Innenverkleidung vorzusehen. Insbesondere bei Ambulanzflugzeugen oder Rettungshubschraubern kommt noch das Erfordernis einer hygienischen und von äußeren Einflüssen geschützten Umgebung für den Transport von Patienten hinzu.

Die bisher üblichen Innenverkleidungspaneele dienen im Wesentlichen nur der Ausbildung einer geschlossenen glatten Fläche als Abschluss des Luftfahrzeuginnenraumes und sind nicht für die Aufhängung von größeren Lasten ausgelegt. Im Falle eines Ambulanzflugzeugs oder eines Rettungshubschraubers müssen aus Platzgründen verschiedene Ausrüstungsgegenstände, wie z.B. Mess- und Versorgungsgeräte für die Wiederbelebung und Stabilisierung von Patienten an den Seiten aufgehängt werden, wofür eine eigene tragfähige Konstruktion mit Seitenwänden, einer Deckwand und einer massiven Bodenplatte vorgesehen sein muss, die aus Platzgründen unmittelbar an die Innenverkleidung anschließend ausgebildet ist.

Auf diese Weise verringert sich der benützbare Innenraum und erhöht sich das Gewicht des Luftfahrzeuges.

Aus der DE 10 2006 048376 A1 geht eine Kabinenstruktureinheit zur Anbringung von Kabineneinbauelementen für ein Flugzeug hervor, welche freitragend ausgebildet und an einer Flugzeugstruktur befestigbar ist. An Knoten eines Gitters sind Halterungspositionen zur innenraumseitigen Lastaufnahme ausgebildet.

Aufgabe der vorliegenden Erfindung ist die Bereitstellung eines Innenverkleidungsteils und einer Fertigteil-Baugruppe, mit der sowohl eine bessere Raumausnützung als auch eine geringere Gewichtsbelastung erreicht werden kann.

Erfindungsgemäß wird dies bei einem Innenverkleidungsteil der eingangs genannten Art dadurch erreicht, dass das Gitter im Innenverkleidungsteil eingebettet ist, sodass das Innenverkleidungsteil unter der Oberfläche die Vielzahl von auswählbaren Halterungspositionen aufweist,und dass die Gitterknoten durch zylinderförmige Aufnahmeelemente ausgebildet sind, die Bohrungen aufweisen, in welche Gewindeeinsätze einbringbar sind.

Auf diese Weise können die Aufnahmeelemente für die Gewindeeinsätze im Inneren des erfindungsgemäßen Innenverkleidungsteils verborgen sein und können dann nach Bedarf ausgewählt werden, um einen Gewindeeinsatz einzubringen, über den innenraumseitig eine Halterung einer Last durch eine Schraubverbindung erfolgen kann.

Somit ist das erfindungsgemäße Innenverkleidungsteil so ausgebildet, dass es direkt an der Luftfahrzeugzelle befestigt werden kann, zugleich aber so verstärkt ist, dass es Lastkräfte aufnehmen kann, wobei vordefinierte Halterungspositionen an vorbestimmten Stellen der Innenverkleidungsteile vorgesehen sind, an denen die Lastkräfte in den erfindungsgemäßen Innenverkleidungsteil eingeleitet werden können, z.B. in Form von zu diesem Zweck verstärkten Teilbereichen, in denen Gewinde, Haken, Ösen oder ähnliche Befestigungspunkte vorhanden sind.

Auf diese Weise kann auf eine zusätzliche Tragkonstruktion verzichtet und entsprechend Raum eingespart werden. Gegenüber herkömmlichen Lösungen erhöht sich dadurch der im Luftfahrzeugzellenquerschnitt zur Verfügung stehende Raum.

Da die Halterungspositionen bereits bei der Herstellung in die Innenverkleidungsteile eingebaut werden, können nach dem Einbau der Innenverkleidungsteile in eine Luftfahrzeugzelle keine Änderungen an der Position der Halterungspositionen vorgenommen werden, es sei denn es wird das betreffende Innenverkleidungsteil ausgetauscht.

Die Innenverkleidungsteile weisen unter der Oberfläche eine Vielzahl von auswählbaren Halterungspositionen in rasterförmiger Anordnung auf, wodurch eine variable Anbringung von, insbesondere medizinischen Ausrüstungsvorrichtungen erzielt wird.

Die Halterungspositionen sind durch verdeckte Gewindeeinsätze gebildet, die in den Innenverkleidungsteilen integriert sind, wobei die Gewindeeinsätze zur Aufnahme von Halterungsvorrichtungen ausgebildet sind. Die Gewindeeinsätze werden nur dann "aktiviert" wenn sie auch benötigt werden. Nicht mehr gebrauchte Gewindeeinsätze können auch wieder verschlossen werden, um wiederum eine glatte Oberfläche zu erreichen.

Ein weiteres Ausführungsbeispiel der Erfindung kann darin bestehen, dass die Innenverkleidungsteile zur Erhöhung der Steifigkeit in an sich bekannter Weise Verstärkungen oder Verrippungen aufweisen, die an vorbestimmbaren Stellen ausgebildet sein können.

Das Gitter, die Gitterknoten und die Gitterstege können vorzugsweise aus Kohlefaserwerkstoff gebildet sein. Auf diese Weise erfahren die einzelnen Halterungspositionen eine Verbindung untereinander und die Einleitung der wirkenden Lasten in die Flugfahrzeugzelle wird entsprechend verbessert.

Gemäß einer weiteren Ausbildung der Erfindung kann das Innenverkleidungsteil ein wabenförmiges Material aus Aramidfasern und Phenolharz, vorzugsweise in Form von Prepreg-Elementen umfassen, in welches das Gitter eingebettet ist und das zwischen Deckschichten aufgenommen ist. Aufgrund der Verbindung des Gitters und der Deckschichten durch den ausgehärteten Faser-Harz-Schichtaufbau kann eine sehr wirkungsvolle Verbundwirkung erzielt werden.

Die Halterungspositionen können durch die Deckschichten abgedeckt und somit von außen nicht sichtbar sein, wobei Insertpositionsmarkierungen, die darunterliegenden Gitterknoten auf der innenraumseitigen Deckschicht markieren können.

Weiters können in dem erfindungsgemäßen Innenverkleidungsteil eingebettete Befestigungseinsätze vorgesehen sein, die mit dem eingebetteten Gitter kraftschlüssig verbunden sind und so eine wirkungsvolle kraftschlüssige Anbindung mit dem Luftfahrzeugrumpf ermöglichen.

Gemäß einem weiteren Ausführungsbeispiel der Erfindung kann der Befestigungseinsatz ein Durchgangsloch aufweisen, welches von der Innenseite zur Außenseite des Innverkleidungsteils reicht und durch welches eine Befestigungsschraube einsetzbar ist, über welche eine kraftschlüssige Verbindung mit der Luftfahrzeugzelle, z.B. über eine an dieser angebrachten Befestigungskonsole, oder mit einem anderen Innenverkleidungsteil herstellbar ist.

In diesem Zusammenhang kann es vorteilhaft sein, wenn jeder Befestigungseinsatz über einen Steg mit dem Gitter, vorzugsweise mit einem der Gitterknoten, verbunden ist.

Ferner betrifft die Erfindung eine Fertigteil-Baugruppe mit einem oder mehreren erfindungsgemäßen Innenverkleidungsteilen.

Zur Lösung der oben angegebenen Ziele der Erfindung kann bei einer eingangs genannten Fertigteil-Baugruppe mit zwei oder mehreren Innenverkleidungsteilen vorgesehen sein, dass die Innenverkleidungsteile Verbindungsstellen aufweisen, an denen sie untereinander kraftschlüssig verbindbar sind.

Auf diese Weise wird eine Verbundwirkung und dadurch eine Erhöhung der Belastbarkeit erzielt.

Weiters können die Innenverkleidungsteile eingebettete Befestigungseinsätze aufweisen, über die sie zur Krafteinleitung mit der Luftfahrzeugzelle verbunden werden können.

Gemäß einem weiteren Aspekt der Erfindung können die Innenverkleidungsteile Haltewinkel zur Anbindung an und zur Krafteinleitung in die Luftfahrzeugzelle aufweisen, wodurch die auf die Innenverkleidungsteile wirkenden Lasten über die tragenden Elemente der Luftfahrzeugzelle ableitbar sind.

Insbesonders können die Innenverkleidungsteile über die Haltewinkel mit der Luftfahrzeugzelle verschraubbar bzw. verbindbar sein.

Gemäß einer Variante der Erfindung können die Innenverkleidungsteile mindestens zwei Seitenteile und ein Deckenteil aufweisen, die zu einem U-förmigen Querschnitt verbindbar sind. Auf diese Weise kann ein sehr wirkungsvoller Verbund erzielt werden.

In weiterer Ausbildung der Erfindung kann vorgesehen sein, dass die Innenverkleidungsteile unter der Oberfläche eine Vielzahl von auswählbaren Halterungspositionen in rasterförmiger Anordnung aufweisen, um eine variable Anbringung von, insbesondere medizinischen Ausrüstungsvorrichtungen zu ermöglichen.

Gemäß einer anderen Ausführungsform können Teile der Standard-Innenraumverkleidungen durch erfindungsgemäße tragende Innenverkleidungsteile ersetzt werden, welche wiederum so ausgeführt sind, dass sie zumindest eine bzw. mehrere Halterungspositionen zur Lastaufnahme aufweisen.

Aufgrund der durch den Zusammenschluss der Innenverkleidungsteile erreichten hohen Steifigkeit der erfindungsgemäßen Baugruppe kann im Bodenbereich der Luftfahrzeugzelle eine Bodenplatte mit geringer Wandstärke angebracht sein, die nicht in kraftschlüssiger Verbindung mit den Innenverkleidungsteilen steht.

Gemäß einer weiteren Ausführungsform der Erfindung kann die Bodenplatte Halterungen, z. B. für eine Trage, aufweisen und stellt einen Schutz des Flugfahrzeug-Originalbodens bereit.

Ferner betrifft die Erfindung ein Luftfahrzeug mit einer in der Luftfahrzeugzelle angebrachten erfindungsgemäßen Fertigteil-Baugruppe, wobei das Luftfahrzeug z.B. ein Hubschrauber, insbesondere ein Rettungs- oder Notarzthubschrauber, oder ein Flugzeug sein kann, welche die Möglichkeit aufweisen, flexibel benötigte Gerätschaften in die Kabine zu integrieren.

Nachfolgend wird die Erfindung anhand des in den Zeichnungen erläuterten Ausführungsbeispiels eingehend erläutert. Es zeigt dabei
Fig.1 und 2 perspektivische Ansichten einer Ausführungsform der aus erfindungsgemäßen Innenverkleidungsteilen zusammengebauten erfindungsgemäßen Bauteilgruppe;
Fig.3 die Bauteilgruppe gemäß Fig.1 und 2 in einer Explosionsdarstellung;
Fig.4 eine perspektivische Ansicht einer Bodenplatte;
Fig.5 einen Schnitt durch ein Detail eines Innenverkleidungsteils gemäß Fig.1;
Fig.6 einen Schnitt durch eine Verbindungsstelle zwischen einem erfindungsgemäßen Innenverkleidungsteil und einer Luftfahrzeugzellenwand.
Fig.7 eine dreidimensionale Ansicht einer weiteren Ausführungsform des erfindungsgemäßen Innenverkleidungsteils;
Fig.8 eine vergrößerte dreidimensionale Teilansicht des im Innenverkleidungsteil gemäß Fig.7 eingebetteten Gitters;
Fig.9 einen vergrößerten Teilschnitt durch eine der Halterungspositionen des Innenverkleidungsteils gemäß Fig.7;
Fig.10 bis 12 vergrößerte Teilschnitte durch die Halterungsposition gemäß Fig.9 während des Einsetzens eines Gewindeeinsatzes;
Fig.13, 14 und 15 eine Vorder-, Seiten und Draufansicht einer Ausführungsform des erfindungsgemäßen Innenverkleidungsteils;
Fig.16, 17 und 18 eine Vorder- und Seitenansicht sowie einen Schnitt BB des Innenverkleidungsteils gemäß Fig.13 mit Darstellung des eingesetzten Gitters;
Fig.19 einen schematischen randseitigen Schnitt durch einen Teilbereich des Innenverkleidungsteils gemäß Fig. 13 und einen Teilbereich eines mit diesem verbunenend weiteren Innenverkleidungsteils;
Fig.20 einen schematischen Teilschnitt des Innenverkleidungsteils gemäß Fig.13, der mit einer Luftfahrzeugzelle verbunden ist und
Fig.21 bis 24 Schrägansichten der zur Herstellung des Innenverkleidungsteils gemäß Fig.13 erforderlichen Schritte.

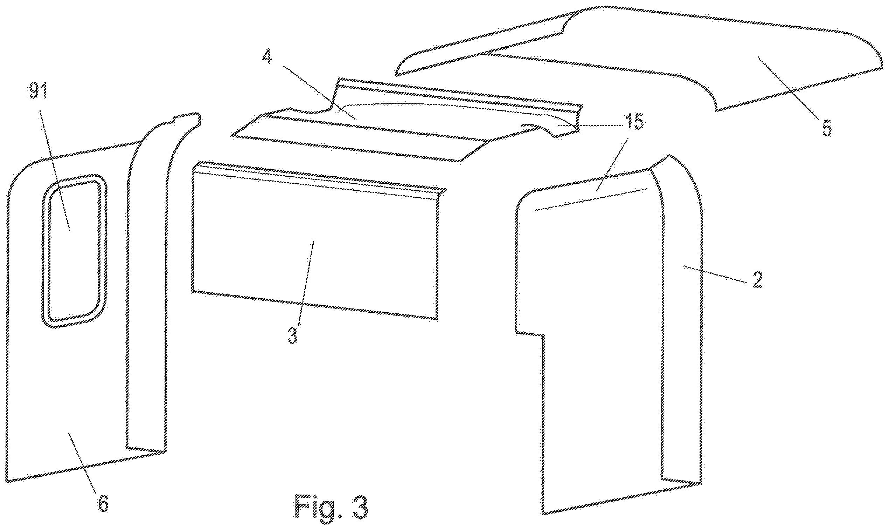

Fig.3 zeigt eine erfindungsgemäße Fertigteil-Baugruppe 1 mit Innenverkleidungsteilen 2, 3, 4, 5 im unverbauten Zustand, welche zur Anpassung an den Verlauf einer Luftfahrzeugzelle durch Fenster, Einstiege etc. unterschiedliche Formgebung mit Vertiefungen, Ausbuchtungen, Durchlässen etc. aufweisen und geschlossenflächig ausgebildet sind. Beispielsweise sind Durchbrechungen 91 den Fenstern der jeweiligen Luftfahrzeugzelle angepasst. Die Luftfahrzeugzelle kann z.B. die eines Rettungshubschraubers oder eines anderen Luftfahrzeuges sein.

Die Innenverkleidungsteile 2, 6 decken gegenüberliegende Seitenbereiche der - nicht dargestellten - Luftfahrzeugzelle ab, während die Innenverkleidungsteile 4, 5 für den Deckenbereich ausgelegt sind. Das Innenverkleidungsteil 3 ist ein sich quer zur Längsrichtung erstreckendes Querelement. Anzahl und Form der Innenverkleidungsteile unterliegen keinen Einschränkungen und können an den Typ und Verwendungszweck des Luftfahrzeugs angepasst sein.

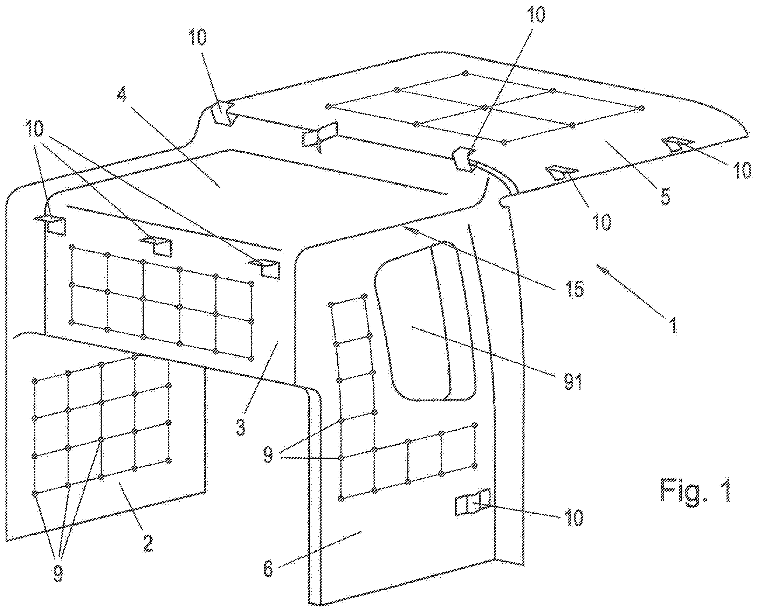

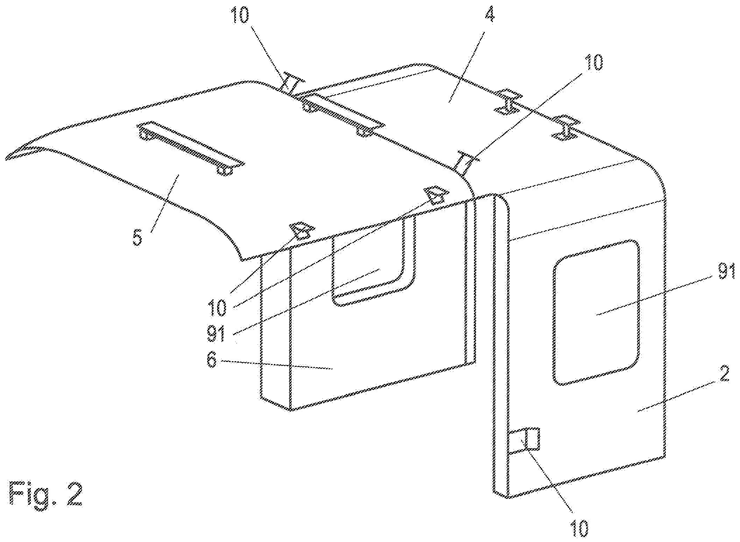

Die Innenverkleidungsteile 2, 3, 4, 5, 6 sind in den Fig.1 bis 3 somit nur beispielhaft angeführt und können entsprechend der Bauform des Luftfahrzeugs verändert werden, sodass die Formgebung der Innenverkleidungsteile 2, 3, 4, 5, 6 im Rahmen der Erfindung beliebig variierbar ist.

An den dem Luftfahrzeugrumpf zugewandten Bereichen weisen die Innenverkleidungsteile 2, 3, 4, 5, 6 Haltewinkel 10 zur Anbindung an und zur Krafteinleitung in die Luftfahrzeugzelle auf. Die jeweiligen Krafteinleitungspunkte in die Luftfahrzeugstruktur werden vom Hersteller des Luftfahrzeugs vorgegeben oder sind entsprechend auszubilden. Über die Haltewinkel 10 werden bei der Montage der Innenverkleidungsteile 2, 3, 4, 5, 6 diese mit der Flugfahrzeugzelle verschraubt oder auf andere geeignete Weise mit letzterer verbunden.

Erfindungsgemäß weisen die Innenverkleidungsteile 2, 3, 4, 5, 6 eine Tragestruktur auf, wobei eine oder mehrere Halterungspositionen 9 vorgesehen sind, die zur innenraumseitigen Lastaufnahme ausgebildet sind.

Die Tragestruktur der lasttragenden Innenverkleidungsteile 2, 3, 4, 5, 6 ist durch den inneren Aufbau der Innenverkleidungsteile 2, 3, 4, 5, 6 ausgebildet und kann durch unterschiedliche, dem Fachmann bekannte Mittel verwirklicht sein, z.B. durch Materialwahl, Wanddicke, Profilgestaltung etc.

Zusätzlich können die Innenverkleidungsteile 2, 3, 4, 5, 6 zur Erhöhung der Steifigkeit Verstärkungen oder Verrippungen aufweisen.

So können die Innenverkleidungsteile durch Kohlefasergewebe mit einer Zugfestigkeit von ca. 900 MPa verstärkt sein, mit Glasfaser kann ungefähr 600MPa erreicht werden.

Bei quasiisotroper Auslegung kann man bei Kohlefaser etwa einen E-Modul von 40 GPa annehmen, während dieser bei Glasfaser etwa 10Gpa beträgt.

Die angegebenen beispielhaften Werte hängen stark von der verwendeten Faser ab, sind jedoch weit höher als bei herkömmlichen Materialien für Innenverkleidungsteile.

Die mit der Tragestruktur des Innenverkleidungsteils in Verbindung stehenden Halterungspositionen 9 ermöglichen die Aufnahme von Lasten, die auf die Halterungspositionen 9 wirken. Diese Lasten sind z.B. medizinische Geräte, Bildschirme, Instrumente, etc. die im Betrieb an diesen Halterungspositionen 9 aufgehängt sein können.

Wie in Fig.1 gezeigt, können die Halterungspositionen 9, die in Fig.1 als Punkte dargestellt sind, - von außen nicht sichtbar - in rasterförmiger Anordnung bereits vorgefertigt vorliegen, sodass sie nach Bedarf auswählbar und bereits im Innenverkleidungsteil integriert sind. Die Halterungspositionen 9 sind zu diesem Zweck unterhalb der Oberfläche der Innenverkleidungsteile 2, 3, 4, 5, 6 vorgesehen und können durch Durchbrechen des entsprechenden Oberflächenbereiches funktionsfähig gemacht werden. Sie werden erst durch diesen Vorgang sichtbar.

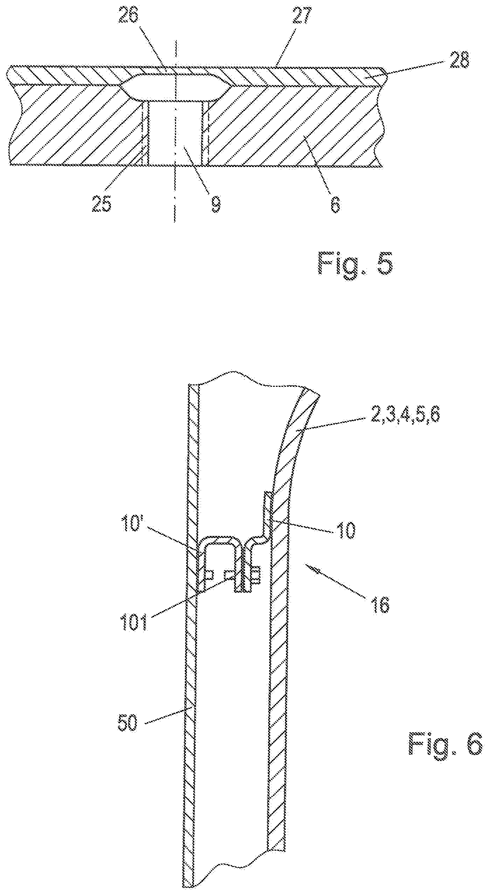

Eine Variante einer solchen Halterungsposition 9 ist in Fig.5 im Detail gezeigt. Das Innenverkleidungsteil 6 weist an dieser Stelle zwei miteinander verbundene Schichten 27, 28 auf, wobei die Schicht 27 eine durchstoßbare Wandschwächung 26 aufweist, unterhalb der ein Hohlraum ausgebildet ist, der ein Schraubengewinde 25 beinhaltet, sodass bei durchstoßener Wandschwächung das darunterliegende Gewindeloch freigelegt ist, in welches von außen zu Aufhängungszwecken ein Gewindebolzen (nicht dargestellt) einschraubbar ist. Das Gewindeloch ist so in die Wand 28 eingebettet, dass die von außen über den Gewindebolzen eingeleiteten Kräfte über die Tragestruktur des Innverkleidungsteils 6 und in weiterer Folge über die Flugfahrzeugzelle abgeleitet werden.

Auf diese Weise sind die Halterungspositionen 9 durch Gewindeeinsätze gebildet, die in den Innenverkleidungsteilen 2, 3, 4, 5, 6 integriert sind, wobei die Gewindeeinsätze zur Aufnahme von Halterungsvorrichtungen ausgebildet sind.

Bei rasterförmiger Anordnung der Halterungspositionen 9, wie sie in Fig.1 gezeigt ist, wird eine variable Anbringung von, insbesondere medizinischen Ausrüstungsvorrichtungen ermöglicht.

Wie z.B. in Fig.1, 2 und 3 zu ersehen ist, sind die Randbereiche der Innenverkleidungsteile 2, 3, 4, 5, 6 so geformt und aufeinander abgestimmt und an Verbindungsstellen mit geeigneten Verbindungselementen 15 versehen, dass sie im zusammengebauten Zustand formschlüssig und kraftschlüssig miteinander verbunden sind.

Durch die kraftschlüssige Verbindung der Innenverkleidungsteile 2, 3, 4, 5, 6 stellt sich eine Verbundwirkung ein, wodurch die zusammengebaute Baugruppe eine erhöhte Belastbarkeit aufweist.

So bilden die Innenverkleidungsteile 2, 4, 6 im verbundenen Zustand (Fig.1) einen U-förmigen oder bogenförmigen Querschnitt aus, indem jeweils der obere Randbereich der Innenverkleidungsteile 2 und 6 mit gegenüberliegenden Querendbereichen des Innenverkleidungsteils 4 kraftschlüssig verbunden sind. Durch die weitere Verbindung des Innenverkleidungsteils 3 mit den Seitenbereichen der Innenverkleidungsteile 2, 4, 6 erhöht sich die Steifigkeit der Baugruppe noch.

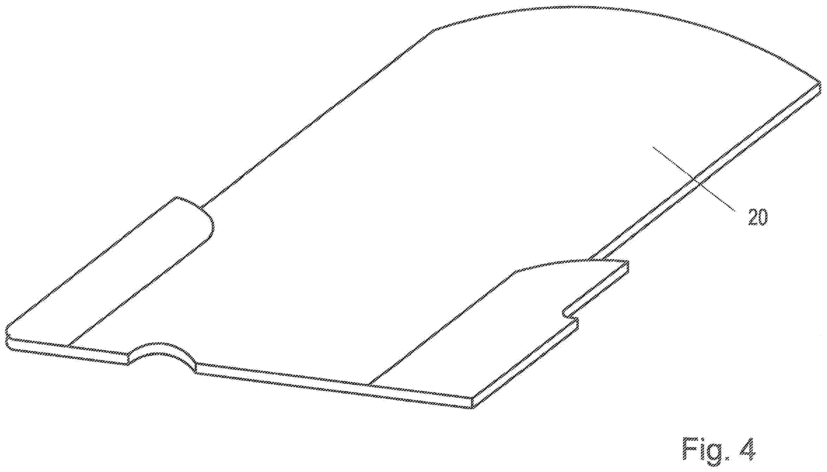

Aufgrund der dadurch erzielten Verbundwirkung ist keine Aussteifung durch eine Bodenplatte erforderlich, sodass im Bodenbereich der Luftfahrzeugzelle eine Bodenplatte 20 (Fig.4) mit geringer Wandstärke und somit geringem Eigengewicht angebracht ist, die nicht in kraftschlüssiger Verbindung mit den Innenverkleidungsteilen 2, 3, 4, 5, 6 steht. Auf der Bodenplatte sind Halterungen, z. B. für eine Trage.

Fig.6 zeigt anhand eines Beispiels einen Krafteinleitungspunkt 16 von einem erfindungsgemäßen Innenverkleidungsteil 2, 3, 4, 5, 6 in eine Wand 50 der Luftfahrzeugzelle, die über den an dem Innenverkleidungsteil 2, 3, 4, 5, 6 angebrachten Haltewinkel 10 und einen an der Wand 50 angebrachten Haltewinkel 10', die miteinander z.B. über eine Schraubverbindung 101 verbunden sind, realisiert ist. Derartige oder ähnliche Krafteinleitungspunkte sind an mehreren Stellen vorgesehen, um die erfindungsgemäßen Innenverkleidungsteile 2, 3, 4, 5, 6 bzw. die erfindungsgemäße Bauteilgruppe so mit der Luftfahrzeugzelle zu verbinden, dass die auf die Innenverkleidungsteile wirkenden Lasten von dieser aufgenommen werden.

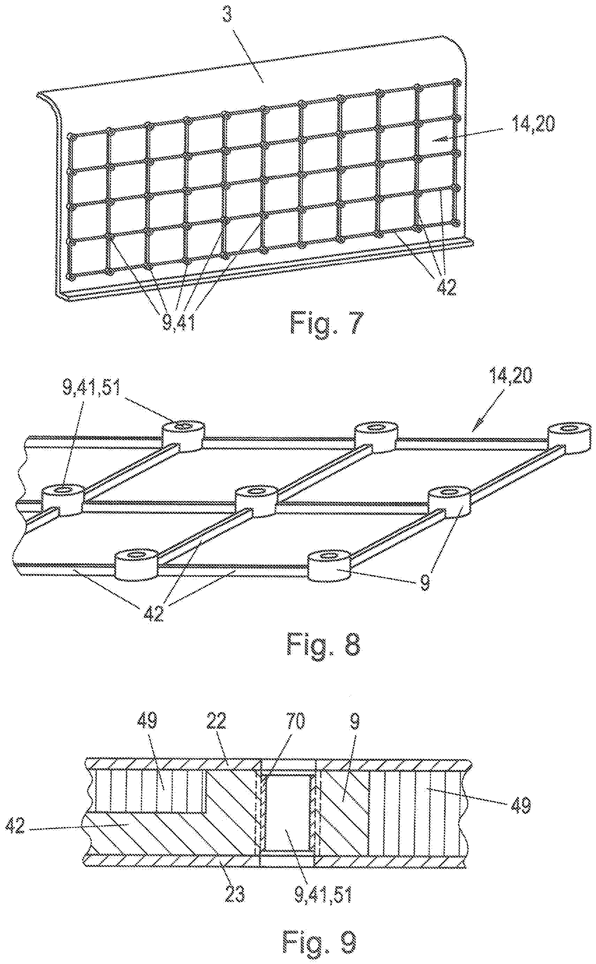

Fig.7 zeigt am Beispiel des Innenverkleidungsteils 3 eine Ausführungsform der inneren Tragestruktur 14 in sichtbarer Darstellung. Die Tragestruktur 14 ist dabei durch ein eingebettetes Gitter 20 mit Gitterknoten 41 und Gitterstegen 42 gebildet, wobei an den Gitterknoten 41 die Halterungspositionen 9 ausgebildet sind.

Das Gitter 20, welches sich aus den Gitterknoten 41 und den Gitterstegen 42 zusammensetzt, ist vorzugsweise aus Kohlefaserwerkstoff gebildet, und kann wie in Fig.7 und 8 gezeigt, quadratische Gitterzellen aufweisen, die aber in jeder anderen Gitterstruktur, wie z.B. dreieckige, sechseckige Gitterzellen etc. aufgebaut sein können. Auch die Materialauswahl für die Ausbildung des Gitters kann im Rahmen der Erfindung variieren. Wie in Fig.7 gezeigt, erstreckt sich das Gitter über den gesamten ebenen Bereich des Innenverkleidungsteils 3, sodass eine ausreichende Zahl an Halterungspositionen 9 bereitgestellt werden kann. Eine davon abweichende Anordnung oder Verteilung der Halterungspositionen 9 ist jedoch ebenso im Rahmen der Erfindung.

Die Gitterknoten 41 sind im gezeigten Ausführungsbeispiel durch, vorzugsweise zylinderförmige, Aufnahmeelemente 51 ausgebildet, die mittige Bohrungen aufweisen, in welche Gewindeeinsätze 70 eingebracht werden können. Der Gitterknotenabstand beträgt z.B. 100 mm. Im eingebauten Zustand sind die Bohrungen der Aufnahmeelemente 51 im erfindungsgemäßen Innenverkleidungsteil 3 verdeckt angeordnet, indem das Gitter 20 in einem wabenförmigen Material 49 aus Aramidfaser und Phenolharz, z.B. Honeycomb-Material eingebettet ist und zwischen Deckschichten 22, 23 aufgenommen ist, wobei auf der Innenraumseite des Innenverkleidungsteils 3 die darunterliegenden Gitterknoten 41 markiert sind.

Im geschwungenen oberen Bereich des Innenverkleidungsteils 3 (Fig.7), in dem keine Halterungspositionen 9 angeordnet sind, laufen die Deckschichten 22, 23 zusammen und sind dort zusammenlaminiert.

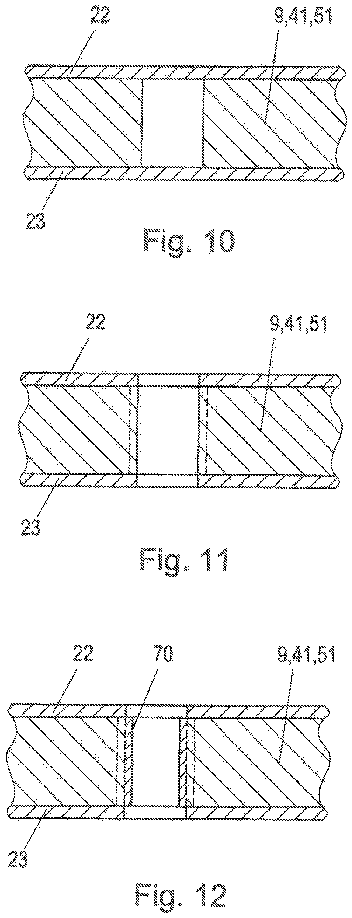

In Fig.10 ist schematisch die Halterungsposition 9 gezeigt, die nach dem Herstellen des Innenverkleidungsteils 3 zwischen den Deckschichten 22, 23 aufgenommen ist und von außen nicht sichtbar ist. Das Aufnahmeelement 51 weist eine mittige Bohrung auf. Anhand der auf der innenraumseitigen Deckschicht 22 vorhandenen Markierung wird nunmehr an einer gewünschten Stelle die vorhandene Bohrung von der Außenseite her aufgebohrt und in diese ein Gewinde geschnitten (Fig.11). Schließlich wird der Gewindeeinsatz 70 eingesetzt, der nunmehr die Funktion einer vom Innenraum der Luftfahrzeugzelle zugänglichen Halterungsposition 9 übernehmen kann, an der Lasten aufgehängt werden können (Fig.12).

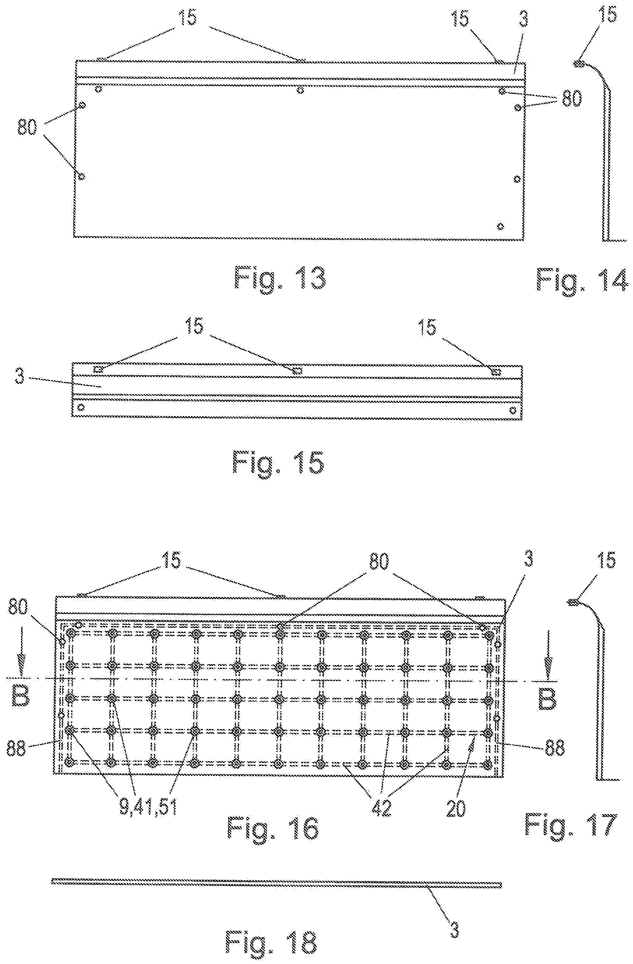

Zur Verbindung des Innenverkleidungsteils 3 mit der Luftfahrzeugzelle sind gemäß Fig. 13 bis 18 ferner im Innenverkleidungsteil 3 eingebettete, vorzugsweise miteinlaminierte Befestigungseinsätze 80, die vorzugsweise aus Edelstahl gebildet sind, vorgesehen, welche über Stege 88 mit dem Gitter 20, vorzugsweise mit einem der Gitterknoten 41, kraftschlüssig verbunden sind, um die an den Haltepositionen 9 wirkenden Lasten an den Luftfahrzeugrumpf abzuleiten.

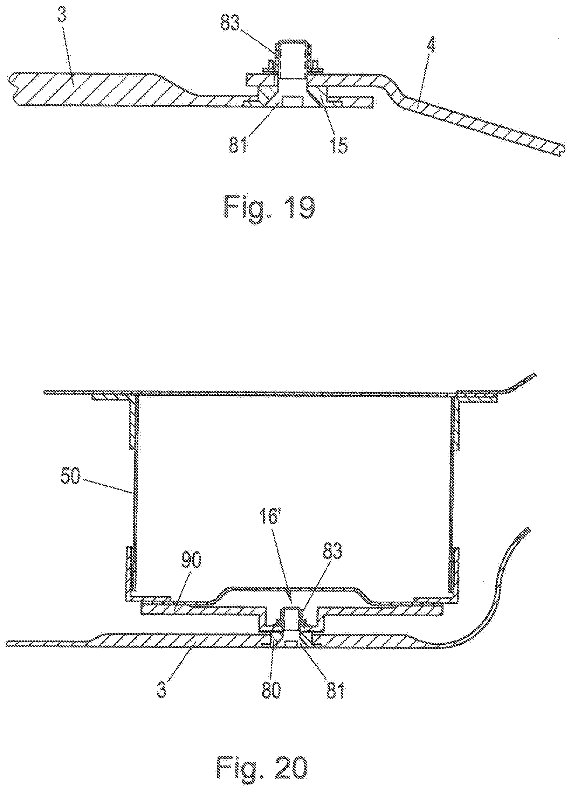

In Fig. 20 ist eine Ausführungsform eines der Befestigungseinsätze 80 gezeigt, der ein Durchgangsloch aufweist, welches von der Innenseite zur Außenseite des Innverkleidungsteils 3 reicht und durch welches eine Befestigungsschraube 81 hindurchgeführt ist, über welche mittels einer außenseitigen Mutter 83 eine kraftschlüssige Verbindung mit der Luftfahrzeugzelle 50 über eine an dieser angebrachten Befestigungskonsole 90 hergestellt ist, wodurch ein Krafteinleitungspunkt 16' ausgebildet wird.

Weiters weist das Innenverkleidungsteil 3 randseitige Verbindungsstellen 15 auf, an denen es mit einem anderen Innenverkleidungsteil 4, z.B. über eine Schrauben-Mutterverbindung kraftschlüssig verbindbar ist, wie in Fig. 19 gezeigt.

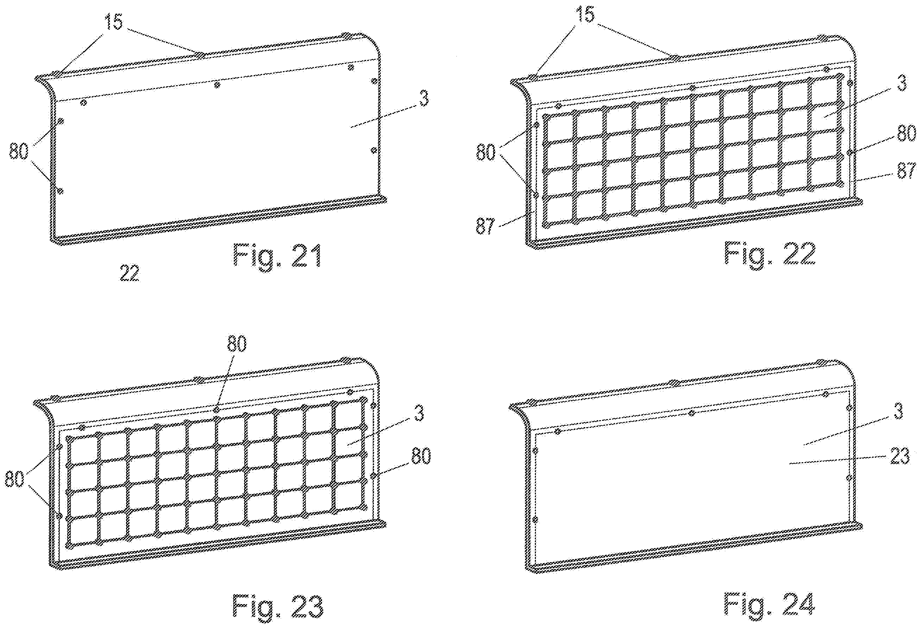

Fig.21 bis 24 zeigen die Schritte zur Herstellung des erfindungsgemäßen Innenverkleidungsteils 3 gemäß einer Ausführungsform der Erfindung, wobei Prepreg-Elemente zur Anwendung gelangen.

Fig.21: Formen und Imprägnieren der innenraumseitigen Deckschicht 22 mit den randseitigen Verbindungsstellen 15 und Löchern 80' für die Befestigungseinsätze 80 und Aushärten derselben im Autoklaven.

Fig.22: Zusammensetzen des Gitters 20 aus Kohlefaserteilen durch Kleben und Einlegen auf die ausgehärtete Deckschicht 22. Einlegen von seitlichen Kohlefaser-Rahmenteilen 87 als Randabschluss.

Fig.23: Einlegen von vorimprägnierten Honigwaben-Elementen in die Zwischenräume des Gitters 20.

Fig.24: Auflegen der außenseitigen Deckschicht 23 und Aushärten im Autoklaven.

### Bezugszeichen:

- 1: Fertigteil-Baugruppe
- 2,3,4,5,6: Innenverkleidungsteil
- 9: Halterungspositionen
- 10, 10': Haltewinkel

- 14: Tragestruktur
- 15: Verbindungsstellen
- 16,16': Krafteinleitungspunkte

- 20: Gitter
- 25: Schraubengewinde
- 26: durchstoßbare Wandschwächung
- 27, 28: Schichten
- 41: Gitterknoten
- 42: Gitterstege
- 49: wabenförmiges Material
- 50: Luftfahrzeugzelle
- 51: zylinderförmige Aufnahmeelemente
- 70: Gewindeeinsätze
- 80: Befestigungseinsätze
- 81: Schraube
- 83: Mutter
- 87: seitliche Rahmenteile
- 88: Stege
- 90: Konsole
- 91: Durchbrechungen

## Patentansprüche

1. Innenverkleidungsteil (2, 3, 4, 5, 6) zum flächigen Einbau mit gleichartigen Innenverkleidungsteilen zum Erzeugen einer Wandverkleidung innerhalb einer Luftfahrzeugzelle, wobei das Innenverkleidungsteil (2, 3, 4, 5, 6) mit der Luftfahrzeugzelle fest verbindbar ist, wobei das Innenverkleidungsteil (2, 3, 4, 5, 6) eine gitterförmige Tragestruktur (20, 21, 22, 23) mit Gitterknoten (14) und Gitterstegen (42) aufweist, wobei zumindest eine Halterungsposition (9) vorgesehen ist, die zur innenraumseitigen Lastaufnahme ausgebildet ist, wobei die gitterförmige Tragestruktur durch ein Gitter (20) gebildet ist, und wobei an den Gitterknoten (41) die Halterungspositionen (9) ausgebildet sind, sodass das Innenverkleidungsteil eine Vielzahl von auswählbaren Halterungspositionen (9) in rasterförmiger Anordnung aufweist, um innenraumseitig eine variable Anbringung von, insbesondere medizinischen Ausrüstungsvorrichtungen zu ermöglichen, **dadurch gekennzeichnet, dass** das Gitter (20) im Innenverkleidungsteil (2, 3,4, 5, 6) eingebettet ist, sodass das Innenverkleidungsteil unter der Oberfläche die Vielzahl von auswählbaren Halterungspositionen (9) aufweist,und dass die Gitterknoten (41) durch zylinderförmige Aufnahmeelemente (51) ausgebildet sind, die Bohrungen aufweisen, in welche Gewindeeinsätze (70) einbringbar sind.

2. Innenverkleidungsteil nach Anspruch 1, **dadurch gekennzeichnet, dass** das Gitter (20), die Gitterknoten (41) und die Gitterstege (42) aus Kohlefaserwerkstoff gebildet sind.

3. Innenverkleidungsteil nach Anspruch 1 oder 2, **dadurch gekennzeichnet, dass** das Innenverkleidungsteil (2, 3, 4, 5) ein wabenförmiges Material aus Aramidfasern und Phenolharz umfasst, in welches das Gitter (40) eingebettet ist und das zwischen Deckschichten (22, 23) aufgenommen ist, und dass die Halterungspositionen (9) durch die Deckschichten (22, 23) abgedeckt sind und Insertpositionsmarkierungen die darunterliegenden Gitterknoten (41) auf der innenraumseitigen Deckschicht markieren.

4. Innenverkleidungsteil nach einem der Ansprüche 1 bis 3, **dadurch gekennzeichnet, dass** in dem Innenverkleidungsteil eingebettete Befestigungseinsätze (80) vorgesehen sind, die mit dem eingebetteten Gitter (20) kraftschlüssig verbunden sind.

5. Innenverkleidungsteil nach Anspruch 4, **dadurch gekennzeichnet, dass** der Befestigungseinsatz (80) ein Durchgangsloch aufweist, welches von der Innenseite zur Außenseite des Innverkleidungsteils reicht und durch welches eine Befestigungsschraube (81) einsetzbar ist, über welche eine kraftschlüssige Verbindung mit der Luftfahrzeugzelle, z.B. über eine an dieser angebrachten Befestigungskonsole (90), oder mit einem anderen Innenverkleidungsteil herstellbar ist.

6. Innenverkleidungsteil nach Anspruch 4 oder 5, **dadurch gekennzeichnet, dass** jeder Befestigungseinsatz (80) über einen Steg (88) mit dem Gitter, vorzugsweise mit einem der Gitterknoten, verbunden ist.

7. Fertigteil-Baugruppe mit einem oder mehreren Innenverkleidungsteilen nach einem der Ansprüche 1 bis 6, **dadurch gekennzeichnet, dass** die Innenverkleidungsteile (2, 3, 4, 5, 6) randseitige Verbindungsstellen (15) aufweisen, an denen sie untereinander kraftschlüssig verbindbar sind.

8. Fertigteil-Baugruppe nach Anspruch 7, **dadurch gekennzeichnet, dass** die Innenverkleidungsteile (2, 3, 4, 5, 6) mindestens zwei Seitenteile und ein Deckenteil aufweisen, die zu einem U-förmigen Querschnitt verbindbar sind.

9. Fertigteil-Baugruppe nach Anspruch 7 oder 8, **dadurch gekennzeichnet, dass** im Bodenbereich der Luftfahrzeugzelle eine Bodenplatte (20) mit geringer Wandstärke angebracht ist, die nicht in kraftschlüssiger Verbindung mit den Innenverkleidungsteilen (2, 3, 4, 5, 6) steht.

10. Fertigteil-Baugruppe nach Anspruch 9, **dadurch gekennzeichnet, dass** die Bodenplatte Halterungen, z. B. für eine Trage, aufweist.

11. Fertigteil-Baugruppe nach einem der Ansprüche 7 bis 10, **dadurch gekennzeichnet, dass** die Innenverkleidungsteile (2, 3,4, 5, 6) Haltewinkel (10, 10') zur Anbindung an und zur Krafteinleitung in die Luftfahrzeugzelle aufweisen.

12. Luftfahrzeug mit einem oder mehreren in der Luftfahrzeugzelle angebrachten Innenverkleidungsteilen nach einem der Ansprüche 1 bis 6 bzw. mit einer Fertigteil-Baugruppe nach einem der Ansprüche 7 bis 11.

13. Luftfahrzeug nach Anspruch 12, **dadurch gekennzeichnet, dass** es ein Hubschrauber, insbesondere ein Rettungshubschrauber, oder ein Flugzeug ist.

## Claims

1. An interior trim part (2, 3, 4, 5, 6) for planar installation comprising similar interior trim parts for producing a wall covering inside an aircraft cell, wherein the interior trim part (2, 3, 4, 5, 6) may be rigidly connected to the aircraft cell, wherein said interior trim part (2, 3, 4, 5, 6) has a latticed support structure (20, 21, 22, 23) comprising lattice nodes (41) and lattice webs (42), wherein at least one holding position (9) is provided, which is formed to receive loads on the interior side, said latticed support structure being formed by a lattice (20), holding positions (9) being formed at the lattice nodes (41), so that said interior trim part has a plurality of selectable holding positions (9) in a grid-like arrangement to allow for a variable attachment of equipment devices, especially medical ones, **characterized in that** said lattice (20) is embedded in the interior trim part (2, 3, 4, 5, 6), so that the interior trim part has said plurality of selectable holding positions (9) beneath its surface and that said lattice nodes (41) are formed by cylindrical receiving elements (51) having bores into which threaded inserts (70) may be inserted.

2. The interior trim part of claim 1, **characterized in that** the lattice (20), the lattice nodes (41) and the lattice webs (42) are preferably formed from a carbon fiber material.

3. The interior trim part of claim 1 or 2, **characterized in that** the interior trim part (2, 3, 4, 5) comprises a honeycomb-shaped material of aramid fibers and phenolic resin, in which the lattice (40) is embedded and which is accommodated between cover layers (22, 23), and that the holding positions (9) are covered by the cover layers (22, 23) and insert position markings on the interior-side cover layer mark the underlying lattice nodes (41).

4. The interior trim part of any one of the claims 1 to 3, **characterized in that** attachment inserts (80) are provided which are embedded in the interior trim part and force-locked to the embedded lattice (20).

5. The interior trim part of claim 4, **characterized in that** the attachment insert (80) has a through hole which extends from the inner side to the outer side of the interior trim part and through which an attachment screw (81) may be inserted, by means of which a force-locked connection may be established to the aircraft cell, e.g. by means of an attachment socket (90) attached thereto, or to another interior trim part.

6. The interior trim part of claim 4 or 5, **characterized in that** every attachment insert (80) is connected to the lattice, preferably to one of the lattice nodes, by means of a web (88).

7. A set of prefabricated parts having one or more interior trim parts of one of the claims 1 to 6, **characterized in that** the interior trim parts (2, 3, 4, 5, 6) have connection points (15) on the peripheral side, at which they may be force-locked to one another.

8. The set of prefabricated parts of claim 7, **characterized in that** the interior trim parts (2, 3, 4, 5, 6) have at least two side parts and one ceiling part, which are connectable to form a U-shaped cross section.

9. The set of prefabricated parts of claim 7 or 8, **characterized in that** a floor plate (20) of reduced wall thickness, which is not in a force-locked connection with the interior trim parts (2, 3, 4, 5, 6), is attached in the floor section of the aircraft cell.

10. The set of prefabricated parts of claim 9, **characterized in that** the floor plate has holders, e.g. for a stretcher.

11. The set of prefabricated parts of one of the claims 7 to 10, **characterized in that** the interior trim parts (2, 3, 4, 5, 6) have fixing brackets (10, 10') for attachment to and force transmission into the aircraft cell.

12. An aircraft having one or more interior trim parts of the claims 1 to 6 attached in the aircraft cell or a set of prefabricated parts of one of the claims 7 to 11.

13. The aircraft of claim 12, **characterized in that** it is a helicopter, especially a rescue helicopter, or an airplane.

## Revendications

1. Pièce (2, 3, 4, 5, 6) de revêtement intérieur destinée à l'installation à plat, comprenant des pièces de revêtement intérieur similaires pour créer un revêtement de paroi dans une cellule de véhicule aérien, la pièce (2, 3, 4, 5, 6) de revêtement intérieur pouvant être fixée solidement à la cellule de véhicule aérien, la pièce (2, 3, 4, 5, 6) de revêtement intérieur ayant une structure (20, 21, 22, 23) de support en forme de grille comprenant des noeuds (41) de grille et des traverses (42) de grille, au moins une position (9) de support étant prévue, qui est formée pour recevoir une charge du côté intérieur, la structure de support en forme de grille étant formée par une grille (20), et les positions (9) de support étant formées sur les noeuds (41) de grille de sorte que la pièce de revêtement intérieur présente une pluralité de positions (9) de support sélectionnables disposées en forme de trame, qui permet d'attacher notamment des dispositifs d'équipement médical du côté intérieur de façon variable, **caractérisée en ce que** la grille (20) est intégrée dans la pièce (2, 3, 4, 5, 6) de revêtement intérieur de sorte que la pièce de revêtement intérieur présente la pluralité de positions (9) de support sélectionnables sous sa surface et **en ce que** les noeuds (41) de grille sont formés par des éléments (51) de réception cylindriques, qui ont des trous, dans lesquels des inserts (70) filetés peuvent être insérés.

2. Pièce de revêtement intérieur selon la revendication 1, **caractérisée en ce que** la grille (20), les noeuds (41) de grille et les traverses (42) de grille sont formés à partir d'un matériau à base de fibres de carbone.

3. Pièce de revêtement intérieur selon l'une des revendications 1 ou 2, **caractérisée en ce que** la pièce (2, 3, 4, 5, 6) de revêtement intérieur comprend un matériau en fibres d'aramide et résine phénolique en forme de nid d'abeilles, dans lequel la grille (40) est intégrée et qui est compris entre des couches (22, 23) couvrantes, et **en ce que** les positions (9) de support sont couvertes par les couches (22, 23) couvrantes et **en ce que** des repères de position d'insert marquent les noeuds (41) de grille sous-jacents du côté intérieur de la couche couvrante.

4. Pièce de revêtement intérieur selon une quelconque des revendications 1 à 3, **caractérisée en ce que** des inserts (80) d'attachement intégrés dans la pièce de revêtement intérieur sont prévus, qui sont reliés avec la grille (20) intégrée par interaction de forces.

5. Pièce de revêtement intérieur selon la revendication 4, **caractérisée en ce que** l'insert (80) d'attachement présente un trou de passage qui s'étend du côté intérieur au côté extérieur de la pièce de revêtement intérieur et à travers lequel une vis (81) d'attachement peut être insérée, par laquelle peut être réalisée une liaison par interaction de forces avec la cellule de véhicule aérien, par exemple à travers une console (90) d'attachement montée sur celle-ci, ou avec un autre élément de revêtement d'intérieur.

6. Pièce de revêtement intérieur selon l'une des revendications 4 ou 5, **caractérisé en ce que** chaque insert (80) d'attachement est relié avec la grille, de préférence avec un des noeuds de grille, moyennant une traverse (88).

7. Ensemble de construction préfabriqué avec une ou plusieurs pièces de revêtement intérieur selon une quelconque des revendications 1 à 6, **caractérisé en ce que** les pièces (2, 3, 4, 5, 6) de revêtement intérieur présentent des positions (15) de liaison latérales, au niveau desquelles elles sont reliés entre elles par interaction de forces.

8. Ensemble de construction préfabriqué selon la revendication 7, **caractérisé en ce que** les pièces (2, 3, 4, 5, 6) de revêtement intérieur présentent au moins deux parties latérales et une partie supérieure, qui peuvent être reliées pour donner une section transversale en « U ».

9. Ensemble de construction préfabriqué selon l'une des revendications 7 ou 8, **caractérisé en ce que** dans la partie inférieure de la cellule de véhicule aérien est montée une plaque (20) de fond avec une paroi d'épaisseur réduite, qui n'est pas reliée avec les pièces (2, 3, 4, 5, 6) de revêtement intérieur par interaction de forces.

10. Ensemble de construction préfabriqué selon la revendication 9, **caractérisé en ce que** la plaque de fond présente des supports, par exemple pour un brancard.

11. Ensemble de construction préfabriqué selon une quelconque des revendications 7 à 10, **caractérisé en ce que** les pièces (2, 3, 4, 5, 6) de revêtement intérieur présentent des équerres (10, 10') de maintien pour établir une liaison avec la cellule de véhicule aérien et une transmission de force à celle-ci.

12. Véhicule aérien avec une ou plusieurs pièces de revêtement intérieur selon une quelconque des revendications 1 à 6 ou avec un ensemble de construction préfabriqué selon une quelconque des revendications 7 à 11.

13. Véhicule aérien selon la revendication 1, **caractérisé en ce que** il s'agit d'un hélicoptère, notamment d'un hélicoptère de sauvetage, ou d'un avion.
